# EUROPEAN PATENT SPECIFICATION

(11) **EP 4 115 646 B1**
(45) Date of publication and mention of the grant of the patent: **18.06.2025**
(21) Application number: 22710917.0
(22) Date of filing: 04.02.2022
(51) Int. Cl.: H04W 28/02, H04W 40/22

(54) **MESH NETWORK RANGE EXTENSION AND RELIABILITY ENHANCEMENT THROUGH LOWER ORDER MIMO SPATIAL STREAMS**
MESH-NETZWERKBEREICHSERWEITERUNG UND ZUVERLÄSSIGKEITSVERBESSERUNG DURCH RÄUMLICHE MIMO-STRÖME NIEDRIGERER ORDNUNG
EXTENSION DE PORTÉE ET AMÉLIORATION DE FIABILITÉ DE RÉSEAUX MAILLÉS PAR L'INTERMÉDIAIRE DE FLUX SPATIAUX MIMO D'ORDRE INFÉRIEUR

(30) Priority: 12.02.2021 US 202163149059 P
(43) Date of publication of application: 11.01.2023
(73) Proprietor: Google LLC, Mountain View, CA 94043 (US)
(72) Inventor: WEN, Yu, Mountain View, California 94043 (US); CAI, Zhifeng, Mountain View, California 94043 (US); DUVVURI, Srinivasa Kumar, Mountain View, California 94043 (US); HAYES, Raymond Reynolds, Mountain View, California 94043 (US); HAYES, Kevin N., Mountain View, California 94043 (US); WU, Der-Woei, Mountain View, California 94043 (US)
(74) Representative: Maikowski & Ninnemann Patentanwälte Partnerschaft mbB
(86) International application number: PCT/US2022/070528
(87) International publication number: WO 2022/174215

(56) References cited:
- US-A1- 2007 206 695
- US-A1- 2013 208 606
- US-A1- 2017 302 401

## Description

### BACKGROUND

Wi-Fi mesh network routers suffer from limited range and reliability issues due to link budget limitations when an NxM Multiple-Input, Multiple-Output (MIMO) channel is fully utilized to carry N spatial data streams in order to maximize network data throughput. Maximizing throughput has an impact on the range covered by a Wi Fi mesh network router. However, there are opportunities to change rate adaptation techniques to provide more consistent Wi-Fi coverage for the user.

According to US 2017/0302401 A1, a wireless node selects modulation coding schemes (MCS) and number of spatial streams for transmitting data to devices via a MU-MIMO transmission based on the total number of spatial streams.

US 2013/0208606 A1 describes that transmission parameters are determined for communication between apparatuses. These transmission parameters may specify, for example, a number of spatial streams, a bandwidth, and a transmission rate.

US 2007/0206695 A1 discusses that an accurate total error rate performance can be measured using a computed error vector magnitude per stream. Using this error vector magnitude, the receiver or the transmitter can advantageously generate an optimized modulation and coding scheme that corresponds to a specific number of streams, modulation and coding rate for the transmitter.

### SUMMARY

The invention is set forth in the independent claims. Specific embodiments are presented in the dependent claims.

This summary is provided to introduce simplified concepts of mesh network range extension and reliability enhancement through lower order MIMO spatial streams.

The simplified concepts are further described below in the Detailed Description. This summary is not intended to identify essential features of the claimed subject matter nor is it intended for use in determining the scope of the claimed subject matter.

In aspects, methods, devices, systems, and means for wireless communication in a wireless mesh network by a wireless mesh router, in particular, for improving wireless communication range and reliability in a wireless mesh network by a wireless mesh router, describe the mesh router measuring an indication of a link quality between the wireless mesh router and another wireless device. The wireless mesh router determines a number of spatial streams for the wireless communication based on the measured indication of link quality and uses the determined number of spatial streams to select a channel bandwidth and a Modulation and Coding Scheme (MCS) for the wireless communication. The wireless mesh router configures a wireless transceiver for the wireless communication using the determined number of spatial streams, the selected channel bandwidth, and the selected MCS. The wireless mesh router may communicate with the other wireless device using the configured wireless transceiver.

According to an aspect, a wireless mesh (access) router comprises one or more wireless transceivers; and a processor and memory system that stores a rate controller application and, when executing the rate controller application, performs the method of any aspect or embodiment described herein.

### BRIEF DESCRIPTION OF THE DRAWINGS

Aspects of mesh network range extension and reliability enhancement through lower order MIMO spatial streams are described with reference to the following drawings. The same numbers are used throughout the drawings to reference like features and components:
FIG. 1 illustrates an example wireless network environment in which various aspects of mesh network range extension and reliability enhancement through lower order MIMO spatial streams can be implemented.
FIG. 2 illustrates example device diagrams for a mesh router and a client device that can implement various aspects of mesh network range extension and reliability enhancement through lower order MIMO spatial streams.
FIG. 3 illustrates example data throughputs versus path loss for various combinations of a number of spatial streams and channel bandwidths in accordance with various aspects of mesh network range extension and reliability enhancement through lower order MIMO spatial streams.
FIG. 4 illustrates an example method of mesh network range extension and reliability enhancement through lower order MIMO spatial streams as generally related to the mesh router in accordance with aspects of the techniques described herein.

### DETAILED DESCRIPTION

### Overview

Wi-Fi mesh network routers suffer from limited range and reliability issues due to link budget limitations when an NxN Multiple-Input, Multiple-Output (MIMO) channel is fully utilized to carry N spatial data streams in order to maximize network data throughput. These range and reliability issues are especially severe for the 802.11ax mesh routers with Wi-Fi 6 backhaul where transmit power is significantly reduced by the regulatory requirements for Low Power Indoor (LPI) 802.11ax 6E devices. The LPI transmit power reduction when using a Modulation and Coding Scheme 0 (MCS0) varies from 4.5 dB to 7.5 dB, depending on the channel bandwidth (e.g., 160 MHz or 80 MHz channel bandwidth).

By improving rate adaptation techniques in Wi-Fi mesh routers, consistency of coverage range can be improved. Overcoming the range and reliability issues for 802.11ax mesh routers with Wi-Fi 6 backhaul can increase the cost and reduce the options for maintaining a small form factor for a mesh router. For example, increasing the number of transmit antennas, N, to three or four antennas (N=3 or N=4) adds hardware cost to a mesh router and affects the form factor of the product design as compared to using two antennas (N=2). Changes in rate adaptation techniques can improve coverage without increasing the cost or reducing the options for maintaining a small form factor for a mesh router.

### Example Environment

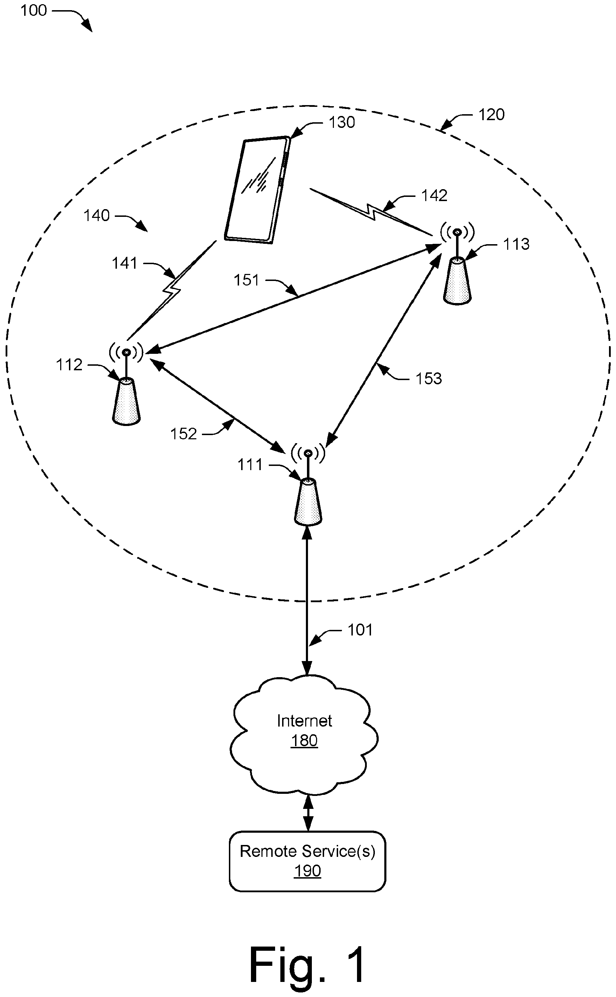

FIG. 1 illustrates an example environment 100, which includes multiple mesh routers 110, illustrated as mesh router 111, mesh router 112, and mesh router 113. The mesh routers 110 collectively provide a Wi-Fi network 120 that provides wireless connectivity to one or more client devices 130. Each client device 130 can communicate with one or more mesh routers 110 through one or more wireless communication links 140, illustrated as wireless communication link 141 and wireless communication link 142. In this example, the client device 130 is implemented as a smartphone. Although illustrated as a smartphone, the client device 130 may be implemented as any suitable computing or electronic device, such as a mobile communication device, gaming device, media device, laptop computer, desktop computer, tablet computer, smart appliance, and the like. The mesh routers 110 may implement one or more Wireless Local Area Network (WLAN) technologies, such as IEEE 802.11, IEEE 802.11a, IEEE 802.11b, IEEE 802.11g, IEEE 802.11n (Wi-Fi 4), IEEE 802.11ac (Wi-Fi 5), IEEE 802.11ax (Wi-Fi 6, Wi-Fi 6E), or future evolutions thereof.

The mesh routers 110 are connected by wired (e.g., Ethernet) or wireless backhaul links (mesh links) at 151, 152, and 153 to send network traffic between client devices 130 and/or between client devices and the Internet 180 and remote service(s) 190. For example, one or more mesh routers, such as the mesh router 111 include a network interface to connect to the Internet 180, such as via a cable modem or DSL modem and a corresponding communication link 101.

### Example Devices

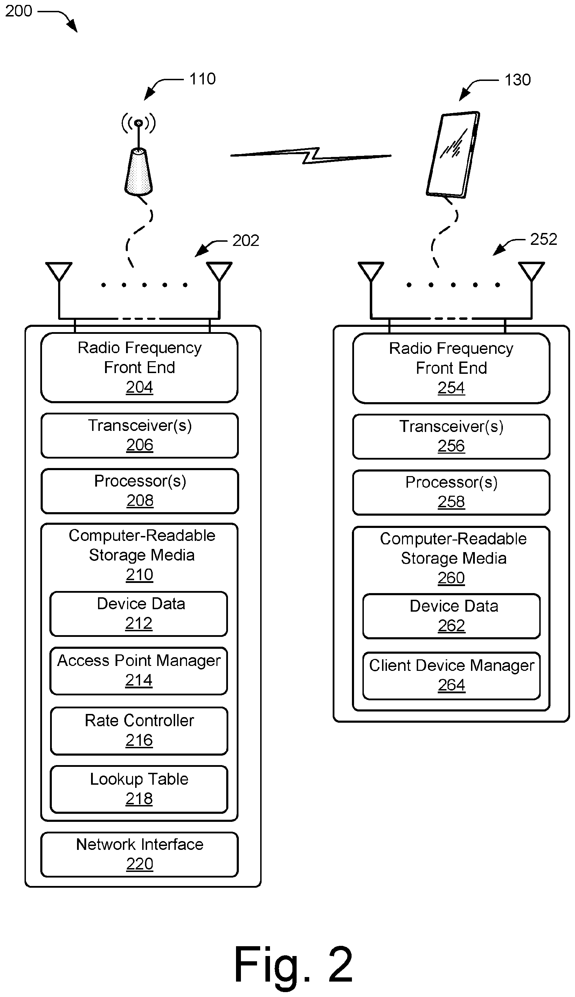

FIG. 2 illustrates an example device diagram 200 of the multiple mesh routers 110 and the client device 130. The mesh routers 110 and the client device 130 may include additional functions and interfaces that are omitted from FIG. 2 for the sake of clarity.

The mesh router 110 includes antennas 202, a radio frequency front end 204 (RF front end 204), one or more transceivers 206 that are configured for WLAN (Wi-Fi) communication with the client device 130 and/or another mesh router. The RF front end 204 can couple or connect the transceivers 206 to the antennas 202 to facilitate various types of wireless communication. The antennas 202 of the mesh router 110 may include an array of multiple antennas that are configured similarly to or differently from each other. The antennas 202 and the RF front end 204 can be tuned to, and/or be tunable to, one or more frequency bands defined by the IEEE 802.11 and/or Wi-Fi communication standards and implemented by the transceiver(s) 206. Additionally, the antennas 202, the RF front end 204, and/or the transceiver(s) 206 may be configured to support beamforming for the transmission and reception of communications with the client device 130 and/or another mesh router.

The mesh router 110 also includes processor(s) 208 and computer-readable storage media 210 (CRM 210). The processor 208 may be a single core processor or a multiple core processor composed of a variety of materials, such as silicon, polysilicon, high-K dielectric, copper, and so on. CRM 210 may include any suitable memory or storage device such as random-access memory (RAM), static RAM (SRAM), dynamic RAM (DRAM), non-volatile RAM (NVRAM), read-only memory (ROM), or Flash memory useful to store device data 212 of the mesh router 110. The device data 212 includes network scheduling data, radio resource management data, applications, and/or an operating system of the mesh router 110, which are executable by processor(s) 208 to enable communication with the client device 130 or for mesh link communications between the mesh routers 110.

CRM 210 also includes an access point manager 214, which, in one implementation, is embodied on CRM 210 (as shown). Alternately or additionally, the access point manager 214 may be implemented in whole or part as hardware logic or circuitry integrated with or separate from other components of the mesh router 110. In at least some aspects, the access point manager 214 configures the transceiver(s) 206 for communication with the client device 130 and/or another mesh router 110, as well as communication of data over the Internet 180 via a network interface 220. In at least some aspects, the access point manager 214 configures the RF front end 202 and the transceiver(s) 206 to implement the techniques for mesh network range extension and reliability enhancement through lower order MIMO spatial streams described herein.

The CRM 210 also includes a rate controller 216 and lookup table 218, which, in one implementation, is embodied on CRM 210 (as shown). Alternately or additionally, the rate controller 216 may be implemented in whole or part as hardware logic or circuitry integrated with or separate from other components of the mesh router 110. The rate controller 216 uses a measurement of link quality and the lookup table 218 to determine a configuration for wireless communications. The rate controller 216 uses the measurement of link quality to perform a lookup in the lookup table 218 that includes Modulation and Coding Schemes (MCS) and channel bandwidths for the wireless communication. In one alternative, the lookup table 218 can be included in a Wi-Fi chipset that is included in the transceiver(s) 206. Each MCS defines configuration parameters, such as a modulation type.

The client device 130 includes antennas 252, a radio frequency front end 254 (RF front end 254), one or more transceivers 256 for communicating with mesh routers 110 in the Wi-Fi network 120 (mesh network 120). The RF front end 254 of the client device 130 can couple or connect the transceiver(s) 256 to the antennas 252 to facilitate various types of wireless communication. The antennas 252 of the client device 130 may include an array of multiple antennas that are configured similar to or differently from each other. The antennas 252 and the RF front end 254 can be tuned to, and/or be tunable to, one or more frequency bands defined by the IEEE 802.11 and Wi-Fi communication standards and implemented by the transceiver(s) 256. Additionally, the antennas 252, the RF front end 254, the transceiver(s) 256 may be configured to support beamforming for the transmission and reception of communications with the mesh routers 110.

The client device 130 also includes processor(s) 258 and computer-readable storage media 260 (CRM 260). The processor(s) 258 may be a single core processor or a multiple core processor composed of a variety of materials, such as silicon, polysilicon, high-K dielectric, copper, and so on. The computer-readable storage media described herein excludes propagating signals. CRM 260 may include any suitable memory or storage device such as random-access memory (RAM), static RAM (SRAM), dynamic RAM (DRAM), non-volatile RAM (NVRAM), read-only memory (ROM), or Flash memory useable to store device data 262 of the client device 130. The device data 262 includes user data, multimedia data, beamforming codebooks, applications, and/or an operating system of the client device 130, which are executable by processor(s) 258 to enable wireless communication, signaling, and user interaction with the mesh routers 110.

CRM 260 also includes a client device manager 264. Alternately or additionally, the client device manager 264 may be implemented in whole or part as hardware logic or circuitry integrated with or separate from other components of the client device 130. The client device manager 264 configures the transceiver(s) 256 to implement the functions of a WLAN station (STA).

### Rate Adaptation to Improve Mesh Network Range Extension and Reliability

802.11ax mesh networks have radio frequency (RF) link budgets, which limit the range of operation and RF link reliability as data throughput has been intentionally maximized through the full utilization of an NxN MIMO channel carrying N spatial streams for data traffic at middle and far distance ranges. Rate adaptation techniques that optimize around maximum data throughput may fall short of providing coverage, and thus connectivity, over a wider space.

In aspects, reducing the number of spatial streams, N, to a lower value (e.g., N-1, where N=2 or N-2, where N=3) at middle and far distance ranges using an optimized rate control algorithm, preemptively trades off a lower maximum data throughput limit for a higher link budget. This higher link budget provides longer range and higher RF link reliability by using an NxN spatial diversity of MIMO RF channels for maximizing link budget instead of network throughput.

For example, the 160 MHz bandwidth of 801.11ax (Wi-Fi 6E) can support adequate data throughput on mesh links (e.g., mesh links 151, 152, and 153) and data links (e.g., wireless links 141 and 142) with the reduced number of spatial streams of N-1 (where N=2) or N-2 (where N=3), while increasing the range and improving the reliability of the mesh network 120.

Conventional rate adaptation techniques in many Wi-Fi access points, Wi-Fi mesh routers, and Wi-Fi chipsets measure a packet error rate (PER) for a communication link with a station (STA) device (e.g., the client device 130) or another mesh router. These conventional techniques use the measured PER to perform a lookup in a three-dimensional lookup table of Modulation and Coding Schemes (MCS), a number of spatial streams (NSS), and channel bandwidths. Typically, these techniques will first alter the MCS (e.g., reducing the MCS as far down as MCS0) in an attempt to improve link quality (reducing the measured PER) with the STA (or other mesh router) before changing the NSS or the channel bandwidth to improve link quality.

In one aspect, a rate control controller (e.g., the rate controller 216) of the Wi-Fi mesh router measures a Received Signal Strength Indicator (RSSI) or a Received Channel Power Indicator (RCPI) of received packet transmissions from a STA or another Wi-Fi mesh router. Based on the RSSI or RCPI, the rate controller selects a number of spatial streams (NSS) for the wireless link with the STA or other Wi-Fi mesh router and provides the value of the NSS to a Wi-Fi chipset. The Wi-Fi chipset uses that NSS value to perform a lookup in a two-dimensional lookup table of Modulation and Coding Scheme (MCS) and channel bandwidths. Alternatively, the rate controller 216 can perform the lookup in the lookup table 218 that is included in the CRM 210. The resulting configuration of MCS and channel bandwidth along with the NSS value is used to configure the Wi-Fi transceivers for the wireless link between the Wi-Fi mesh router and the STA or other Wi-Fi mesh router.

In an alternative aspect, a rate control controller (e.g., the rate controller 216) of the Wi-Fi mesh router uses a data throughput of the current communication with a STA or another Wi-Fi mesh router as an input to select a number of spatial streams (NSS) for the wireless link with the STA or other Wi-Fi mesh router and provides the value of the NSS to a Wi-Fi chipset. As in the previous aspect, the Wi-Fi chipset uses that NSS value to perform a lookup in a two-dimensional lookup table of Modulation and Coding Scheme (MCS) and channel bandwidth. Alternatively, the rate controller 216 can perform the lookup in the lookup table 218 that is included in the CRM 210. The resulting configuration of MCS and channel bandwidth along with the NSS value is used to configure the Wi-Fi transceivers for the wireless link between the Wi-Fi mesh router and the STA or other Wi-Fi mesh router.

In a further aspect, a rate control controller (e.g., the rate controller 216) of the Wi-Fi mesh router uses a current MCS in use for communication with a STA or another Wi-Fi mesh router as an input to select a number of spatial streams (NSS) for the wireless link with the STA or other Wi-Fi mesh router and provides the value of the NSS to a Wi-Fi chipset. As in the previous aspect, the Wi-Fi chipset uses that NSS value to perform a lookup in a two-dimensional lookup table of Modulation and Coding Scheme (MCS) and channel bandwidth. Alternatively, the rate controller 216 can perform the lookup in the lookup table 218 that is included in the CRM 210. The resulting configuration of MCS and channel bandwidth along with the NSS value is used to configure the Wi-Fi transceivers for the wireless link between the Wi-Fi mesh router and the STA or other Wi-Fi mesh router.

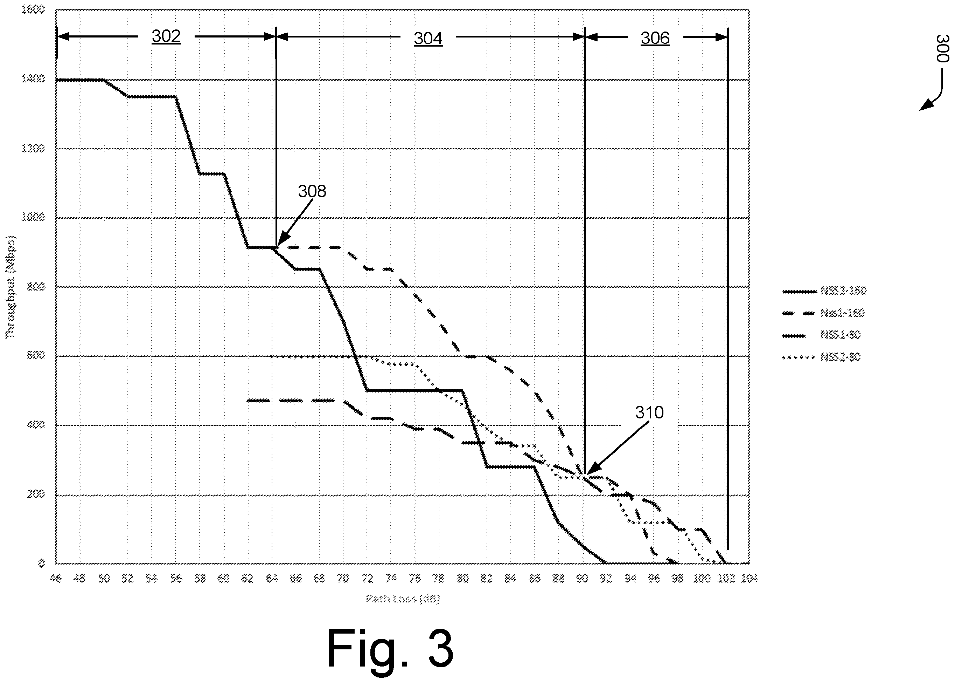

FIG. 3 illustrates example data throughputs versus path loss for various combinations of a number of spatial streams and channel bandwidths in accordance with various aspects of mesh network range extension and reliability enhancement through lower order MIMO spatial streams. The dotted line NSS2-80 in FIG. 3 illustrates the data throughput for a Wi-Fi mesh router using a conventional rate controller that maintains two spatial streams (NSS=2) in an 80 MHz channel bandwidth.

In the aspects discussed above, the rate controller 216 selects switch points between the number of spatial streams and channel bandwidths based on an RSSI, an RCPI, data throughput, or a current MCS. In this example, the wireless mesh router operates in three regions 302, 304, and 306 that are selected by the rate controller 216 to optimize the Wi-Fi coverage area. Although three regions are shown, any suitable number of regions can be used. For example, at lower path loss values in region 302 (generally corresponding to a higher RSSI, a higher RCPI, a high data throughput, or a higher MCS), the rate controller 216 sends a value for NSS=2 to the Wi-Fi chipset in the transceiver(s) 206 that the Wi-Fi chipset uses for a rate adaptation lookup to select a channel bandwidth of 160 MHz (illustrated by the solid line NSS2-160 in FIG. 3) and an appropriate MCS (e.g., MCS0 to MCS13) to configure the transceiver(s) 206 for Wi-Fi communication with a STA or another Wi-Fi mesh router.

Continuing with the example, under conditions where path loss increases (generally corresponding to a medium RSSI, a medium RCPI, a medium data throughput, or a medium MCS), the rate controller 216 optimizes the Wi-Fi coverage area by selecting operation in region 304 with a value of NSS=1. The rate controller 216 sends a value for NSS=1 to the Wi-Fi chipset in the transceiver(s) 206 that the Wi-Fi chipset uses for a rate adaptation lookup to select a channel bandwidth of 160 MHz (illustrated by the short-dashed line NSS1-160 in FIG. 3) and an appropriate MCS to configure the transceiver(s) 206 for Wi-Fi communication with the STA or the other Wi-Fi mesh router.

Continuing further with the example, under conditions where path loss is largest (generally corresponding to a low RSSI, a low RCPI, a low data throughput, or a low MCS), the rate controller 216 optimizes the Wi-Fi coverage area by selecting operation in region 306 with a value of NSS=1. The rate controller 216 sends a value for NSS=1 to the Wi-Fi chipset in the transceiver(s) 206 that the Wi-Fi chipset uses for a rate adaptation lookup to select a channel bandwidth of 80 MHz (illustrated by the long-dashed line NSS1-80 in FIG. 3) and an appropriate MCS to configure the transceiver(s) 206 for Wi-Fi communication with the STA or the other Wi-Fi mesh router.

By selecting the appropriate switch points 308 and 310, the rate controller 216 selects configuration of the number of spatial streams and channel bandwidth that increases Wi-Fi coverage while maintaining a high data throughput. Although this example is illustrated as using one or two spatial streams and two channel bandwidths, the described techniques are applicable to any suitable number of spatial streams (e.g., one to eight spatial streams) and any number of channel bandwidths of any suitable bandwidth (e.g., 20 MHz, 40 MHz, 80 MHz, 160 MHz, and/or 320 MHz channel bandwidths).

### Example Method

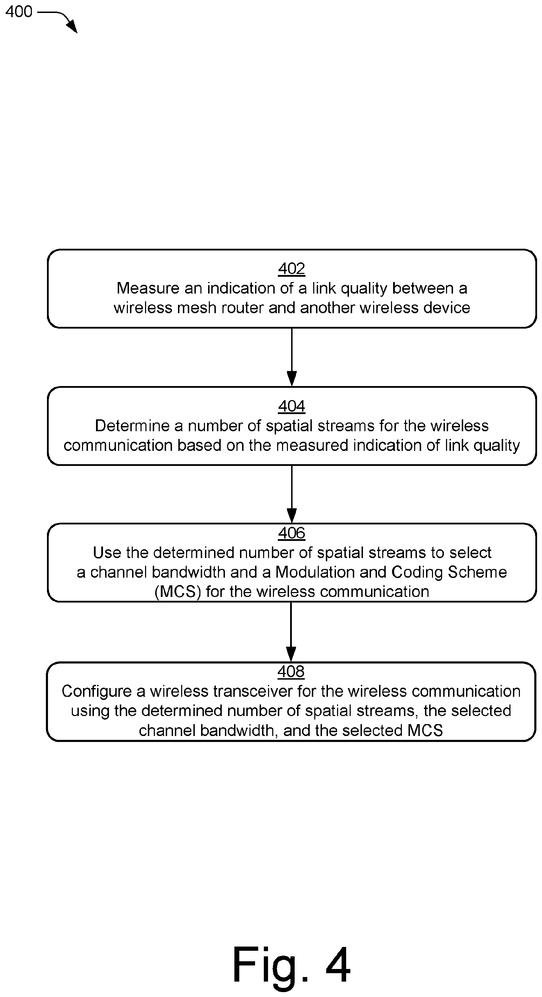

Example method 400 is described with reference to FIG. 4 in accordance with one or more aspects of mesh network range extension and reliability enhancement through lower order MIMO spatial streams. The order in which the method blocks are described are not intended to be construed as a limitation, and any number of the described method blocks can be combined in any order, or skipped to implement a method or an alternate method. Generally, any of the components, modules, methods, and operations described herein can be implemented using software, firmware, hardware (*e.g.,* fixed logic circuitry), or any combination thereof. Some operations of the example methods may be described in the general context of executable instructions stored on computer-readable storage memory that is local and/or remote to a computer processing system, and implementations can include software applications, programs, functions, and the like. Alternatively or in addition, any of the functionality described herein can be performed, at least in part, by one or more hardware logic components, such as, and without limitation, Field-programmable Gate Arrays (FPGAs), Application-specific Integrated Circuits (ASICs), Application-specific Standard Products (ASSPs), System-on-a-chip systems (SoCs), Complex Programmable Logic Devices (CPLDs), and the like.

FIG. 4 illustrates example method(s) 400 of mesh network range extension and reliability enhancement through lower order MIMO spatial streams as generally related to the wireless mesh router 110. At block 402, a wireless mesh router measures an indication of a link quality between the wireless mesh router and another wireless device. For example, the wireless mesh router (e.g., the wireless mesh router 111, 112, or 113) measures a link quality (e.g., an RSSI, an RCPI, a data throughput, a PER, or an MCS).

At block 404, the wireless mesh router determines (e.g., reduces) a number of spatial streams for the wireless communication based on the measured indication of link quality or a combination of the measured indications of link quality. For example, a rate controller (e.g., the rate controller 216) in the wireless mesh router determines a number of spatial steams based on the measured indication of link quality. As an example, the rate controller of the wireless mesh router may compare the measured indication of link quality with at least one threshold value (and/or one or more regions of values) to determine the number of spatial streams.

At block 406, using the determined number of spatial streams, the wireless mesh router selects a channel bandwidth and a Modulation and Coding Scheme (MCS) for the wireless communication. For example, the rate controller uses the determined number of spatial streams to lookup a channel bandwidth and an MCS in a lookup table (e.g., the lookup table 218). For example, the lookup table may comprise two or more, e.g., all, of the following bandwidths: a 20 MHz channel bandwidth, a 40 MHz channel bandwidth, an 80 MHz channel bandwidth, a 160 MHz channel bandwidth, and a 320 MHz channel bandwidth. Alternatively, or in addition, the lookup table may comprise two or more, e.g., all, of the following MCS: an MCS0 MCS: an MCS1 MCS, an MCS2 MCS, an MCS3 MCS, an MCS4 MCS, an MCS5 MCS, an MCS6 MCS, an MCS7 MCS, an MCS8 MCS, an MCS9 MCS, an MCS10 MCS, an MCS11 MCS, an MCS12 MCS and an MCS13 MCS.

At block 408, the wireless mesh router configures a wireless transceiver for the wireless communication using the determined number of spatial streams, the selected channel bandwidth, and the selected MCS. For example, the rate controller 216 and/or the access point manager 214 configures a wireless transceiver (e.g., the transceiver 206) for wireless communication using the determined number of spatial streams, the selected channel bandwidth, and the selected MCS.

Although aspects of mesh network range extension and reliability enhancement through lower order MIMO spatial streams have been described in language specific to features and/or methods, the subject of the appended claims is not necessarily limited to the specific features or methods described. Rather, the specific features and methods are disclosed as example implementations of mesh network range extension and reliability enhancement through lower order MIMO spatial streams.

## Claims

1. A method (400) to improve wireless communication range and reliability in a wireless mesh network (120) by a wireless mesh router (110-112), the method comprising:
measuring (402) a first indication of a link quality between the wireless mesh router (110-112) and a first wireless device (110-112, 130);
determining (404) a number of spatial streams for the wireless communication based on the measured first indication of link quality;
using (406) the determined number of spatial streams to select a channel bandwidth and a Modulation and Coding Scheme, MCS, for the wireless communication; and
configuring (408) a wireless transceiver (206) for the wireless communication using the determined number of spatial streams, the selected channel bandwidth, and the selected MCS.

2. The method of claim 1, the method further comprising:
communicating with the first wireless device (110-112) using the configured wireless transceiver (206).

3. The method of claim 1 or claim 2, wherein the first wireless device (110-112, 130) comprises:
another wireless mesh router (110-112); or
a wireless station, STA, device (130).

4. The method of any one of the preceding claims, wherein the first indication of a link quality comprises one or more of:
a Received Signal Strength Indicator, RSSI;
a Received Channel Power Indicator, RCPI,
a data throughput;
a data Packet Error Rate, PER; or
a Modulation and Coding Scheme, MCS.

5. The method of any one of the preceding claims, wherein the using the determined number of spatial streams to select the channel bandwidth and the Modulation and Coding Scheme for the wireless communication comprises:
using the determined number of spatial streams as an input for a lookup in a two-dimensional lookup table of channel bandwidths and Modulation and Coding Schemes.

6. The method of any one of the preceding claims, wherein the selected channel bandwidth comprises:
a 20 MHz channel bandwidth;
a 40 MHz channel bandwidth;
a 80 MHz channel bandwidth;
a 160 MHz channel bandwidth; or
a 320 MHz channel bandwidth.

7. The method of any one of the preceding claims, wherein the number of spatial streams comprises one or more spatial streams.

8. The method of any one of the preceding claims, wherein the wireless mesh network (120) comprises:
an IEEE 802.11n wireless network;
a Wi-Fi 4 wireless network;
an IEEE 802.11ac wireless network;
a Wi-Fi 5 wireless network;
an IEEE 802.11ax wireless network;
a Wi-Fi 6 wireless network; or
a Wi-Fi 6E wireless network.

9. The method of any one of the preceding claims, wherein determining the number of spatial streams for the wireless communication based on the measured first indication of link quality comprises comparing the measured first indication of link quality with at least one threshold value.

10. The method of any one of the preceding claims, the method further comprising:
measuring a second indication of a link quality between the wireless mesh router (110-112) and a second wireless device (110-112, 130);
determining a number of spatial streams for the wireless communication based on the measured second indication of link quality;
using the determined number of spatial streams to select a channel bandwidth and a Modulation and Coding Scheme, MCS, for the wireless communication;
configuring a wireless transceiver (206) for the wireless communication using the determined number of spatial streams, the selected channel bandwidth, and the selected MCS; and
communicating with the second wireless device (110-112, 130) using the configured wireless transceiver (206).

11. A wireless mesh access router (110-112) comprising:
one or more wireless transceivers (206); and
a processor (208) and memory (210) system to implement a rate controller application (216) configured to perform the method of any of the preceding claims.

12. The wireless mesh access router (110-112) of claim 11, further comprising:
a network interface (220).

13. The wireless mesh access router (110-112) of claim 12, wherein the wireless mesh access router (110-112) is configured to communicate to other wireless mesh access routers (110-112) over backhaul links (151-153) using the network interface (220).

14. Computer-readable storage media (210) comprising instructions that, responsive to execution by a processor (208), direct an apparatus to perform a method as recited in any one of claims 1 to 10.

## Patentansprüche

1. Verfahren (400) zum Verbessern von Bereich und Zuverlässigkeit drahtloser Kommunikation in einem drahtlosen Mesh-Netzwerk (120) durch einen drahtlosen Mesh-Router (110-112), wobei das Verfahren Folgendes umfasst:
Messen (402) einer ersten Angabe einer Verbindungsqualität zwischen dem drahtlosen Mesh-Router (110-112) und einer ersten drahtlosen Vorrichtung (110-112, 130);
Bestimmen (404) einer Anzahl von räumlichen Strömen für die drahtlose Kommunikation basierend auf der gemessenen ersten Angabe der Verbindungsqualität;
Verwenden (406) der bestimmten Anzahl räumlicher Ströme zum Auswählen einer Kanalbandbreite und eines Modulations- und Codierungsschemas (Modulation and Coding Scheme, MCS) für die drahtlose Kommunikation; und
Konfigurieren (408) eines drahtlosen Sender-Empfängers (206) für die drahtlose Kommunikation unter Verwendung der bestimmten Anzahl räumlicher Ströme, der ausgewählten Kanalbandbreite und des ausgewählten MCS.

2. Verfahren nach Anspruch 1, wobei das Verfahren ferner Folgendes umfasst:
Kommunizieren mit der ersten drahtlosen Vorrichtung (110-112) unter Verwendung des konfigurierten drahtlosen Sender-Empfängers (206).

3. Verfahren nach Anspruch 1 oder Anspruch 2, wobei die erste drahtlose Vorrichtung (110-112, 130) Folgendes umfasst:
einen weiteren drahtlosen Mesh-Router (110-112) oder
eine drahtlose Stationsvorrichtung (station, STA) (130).

4. Verfahren nach einem der vorhergehenden Ansprüche, wobei die erste Angabe einer Verbindungsqualität eines oder mehrere von Folgendem umfasst:
einen Empfangssignal-Stärkenindikator (Received Signal Strength Indicator, RSSI);
einen Empfangskanal-Leistungsindikator (Received Channel Power Indicator, RCPI);
einen Datendurchsatz;
eine Datenpaketfehlerrate (Data Packet Error Rate, PER); oder
ein Modulations- und Codierungsschema, MCS.

5. Verfahren nach einem der vorstehenden Ansprüche, wobei das Verwenden der bestimmten Anzahl räumlicher Ströme zum Auswählen der Kanalbandbreite und des Modulations- und Codierungsschemas für die drahtlose Kommunikation Folgendes umfasst:
Verwenden der bestimmten Anzahl räumlicher Ströme als Eingabe für eine Nachschlagetabelle mit zweidimensionalen Kanalbandbreiten und Modulations- und Codierungsschemata.

6. Verfahren nach einem der vorhergehenden Ansprüche, wobei die ausgewählte Kanalbandbreite Folgendes umfasst:
eine 20-MHz-Kanalbandbreite;
eine 40-MHz-Kanalbandbreite;
eine 80-MHz-Kanalbandbreite;
eine 160-MHz-Kanalbandbreite; oder
eine 320-MHz-Kanalbandbreite.

7. Verfahren nach einem der vorhergehenden Ansprüche, wobei die Anzahl der räumlichen Ströme einen oder mehrere räumliche Ströme umfasst.

8. Verfahren nach einem der vorhergehenden Ansprüche, wobei das drahtlose Mesh-Netzwerk (120) Folgendes umfasst:
ein drahtloses IEEE-802.11n-Netzwerk;
ein drahtloses Wi-Fi-4-Netzwerk;
ein drahtloses IEEE-802.11ac-Netzwerk;
ein drahtloses Wi-Fi-5-Netzwerk;
ein drahtloses IEEE-802.11ax-Netzwerk;
ein drahtloses Wi-Fi-6-Netzwerk; oder
ein drahtloses Wi-Fi-6E-Netzwerk.

9. Verfahren nach einem der vorstehenden Ansprüche, wobei das Bestimmen der Anzahl räumlicher Ströme für die drahtlose Kommunikation basierend auf der gemessenen ersten Angabe der Verbindungsqualität das Vergleichen der gemessenen ersten Angabe der Verbindungsqualität mit mindestens einem Schwellenwert umfasst.

10. Verfahren nach einem der vorhergehenden Ansprüche, wobei das Verfahren ferner Folgendes umfasst:
Messen einer zweiten Angabe einer Verbindungsqualität zwischen dem drahtlosen Mesh-Router (110-112) und einer zweiten drahtlosen Vorrichtung (110-112, 130);
Bestimmen einer Anzahl von räumlichen Strömen für die drahtlose Kommunikation basierend auf der gemessenen zweiten Angabe der Verbindungsqualität;
Verwenden der bestimmten Anzahl räumlicher Ströme zum Auswählen einer Kanalbandbreite und eines Modulations- und Codierungsschemas, MCS, für die drahtlose Kommunikation;
Konfigurieren eines drahtlosen Sender-Empfängers (206) für die drahtlose Kommunikation unter Verwendung der bestimmten Anzahl räumlicher Ströme, der ausgewählten Kanalbandbreite und des ausgewählten MCS; and
Kommunizieren mit der zweiten drahtlosen Vorrichtung (110-112, 130) unter Verwendung des konfigurierten drahtlosen Sender-Empfängers (206).

11. Drahtloser Mesh-Zugriffsrouter (110-112), umfassend:
einen oder mehrere drahtlose Sender-Empfänger (206); und
ein Prozessor- (208) und Speichersystem (210) zum Implementieren einer Ratensteuerungs-Anwendung (216), die dazu konfiguriert ist, das Verfahren nach einem der vorstehenden Ansprüche durchzuführen.

12. Drahtloser Mesh-Zugriffsrouter (110-112) nach Anspruch 11, ferner umfassend:
eine Netzwerkschnittstelle (220).

13. Drahtloser Mesh-Zugriffsrouter (110-112) nach Anspruch 12, wobei der drahtlose Mesh-Zugriffsrouter (110-112) dazu konfiguriert ist, mit anderen drahtlosen Mesh-Zugriffsroutern (110-112) über Backhaul-Verbindungen (151-153) unter Verwendung der Netzwerkschnittstelle (220) zu kommunizieren.

14. Computerlesbare Speichermedien (210), umfassend Anweisungen, die als Reaktion auf Ausführen durch einen Prozessor (208) ein Gerät anweisen, ein Verfahren durchzuführen, wie in einem der Ansprüche 1 bis 10 aufgeführt.

## Revendications

1. Procédé (400) pour améliorer la portée et la fiabilité des communications sans fil dans un réseau maillé sans fil (120) par un routeur maillé sans fil (110-112), le procédé comprenant :
la mesure (402) d'une première indication d'une qualité de liaison entre le routeur maillé sans fil (110-112) et un premier dispositif sans fil (110-112, 130) ;
la détermination (404) d'un nombre de flux spatiaux pour la communication sans fil sur la base de la première indication mesurée de qualité de liaison ;
l'utilisation (406) du nombre déterminé de flux spatiaux pour sélectionner une bande passante de canal et un schéma de modulation et de codage, MCS, pour la communication sans fil ; et
la configuration (408) d'un émetteur-récepteur sans fil (206) pour la communication sans fil en utilisant le nombre déterminé de flux spatiaux, la bande passante de canal sélectionnée, et le MCS sélectionné.

2. Procédé selon la revendication 1, le procédé comprenant également :
la communication avec le premier dispositif sans fil (110-112) en utilisant l'émetteur-récepteur sans fil (206) configuré.

3. Procédé selon la revendication 1 ou la revendication 2, dans lequel le premier dispositif sans fil (110-112, 130) comprend :
un autre routeur maillé sans fil (110-112) ; ou
un dispositif de station sans fil, STA, (130).

4. Procédé selon l'une quelconque des revendications précédentes, dans lequel la première indication d'une qualité de liaison comprend l'un ou plusieurs des éléments suivants :
un indicateur de force du signal reçu, RSSI ;
un indicateur de puissance du canal reçu, RCPI ;
un débit de données ;
un taux d'erreur de paquet de données, PER ; ou
un schéma de modulation et de codage, MCS.

5. Procédé selon l'une quelconque des revendications précédentes, dans lequel l'utilisation du nombre déterminé de flux spatiaux pour sélectionner la bande passante de canal et le schéma de modulation et de codage pour la communication sans fil comprend :
l'utilisation du nombre déterminé de flux spatiaux comme entrée pour une recherche dans une table de recherche bidimensionnelle de bandes passantes de canal et de schémas de modulation et de codage.

6. Procédé selon l'une quelconque des revendications précédentes, dans lequel la bande passante de canal sélectionnée comprend :
une bande passante de canal de 20 MHz ;
une bande passante de canal de 40 MHz ;
une bande passante de canal de 80 MHz ;
une bande passante de canal de 160 MHz ; ou
une bande passante de canal de 320 MHz.

7. Procédé selon l'une quelconque des revendications précédentes, dans lequel le nombre de flux spatiaux comprend un ou plusieurs flux spatiaux.

8. Procédé selon l'une quelconque des revendications précédentes, dans lequel le réseau maillé sans fil (120) comprend :
un réseau sans fil IEEE 802.11n ;
un réseau sans fil Wi-Fi 4 ;
un réseau sans fil IEEE 802.11ac ;
un réseau sans fil Wi-Fi 5 ;
un réseau sans fil IEEE 802.11ax ;
un réseau sans fil Wi-Fi 6 ; ou
un réseau sans fil Wi-Fi 6E.

9. Procédé selon l'une quelconque des revendications précédentes, dans lequel la détermination du nombre de flux spatiaux pour la communication sans fil sur la base de la première indication mesurée de qualité de liaison comprend la comparaison de la première indication mesurée de qualité de liaison avec au moins une valeur seuil.

10. Procédé selon l'une quelconque des revendications précédentes, le procédé comprenant également :
la mesure d'une seconde indication d'une qualité de liaison entre le routeur maillé sans fil (110-112) et un second dispositif sans fil (110-112, 130) ;
la détermination d'un nombre de flux spatiaux pour la communication sans fil sur la base de la seconde indication mesurée de qualité de liaison ;
l'utilisation du nombre déterminé de flux spatiaux pour sélectionner une bande passante de canal et un schéma de modulation et de codage, MCS, pour la communication sans fil ;
la configuration d'un émetteur-récepteur sans fil (206) pour la communication sans fil en utilisant le nombre déterminé de flux spatiaux, la bande passante de canal sélectionnée et le MCS sélectionné ; et
la communication avec le second dispositif sans fil (110-112, 130) en utilisant l'émetteur-récepteur sans fil (206) configuré.

11. Routeur d'accès maillé sans fil (110-112) comprenant :
un ou plusieurs émetteurs-récepteurs sans fil (206) ; et
un processeur (208) et un système de mémoire (210) pour mettre en œuvre une application de régulateur de débit (216) configurée pour réaliser le procédé selon l'une quelconque des revendications précédentes.

12. Routeur d'accès maillé sans fil (110-112) selon la revendication 11, comprenant également :
une interface réseau (220).

13. Routeur d'accès maillé sans fil (110-112) selon la revendication 12, dans lequel le routeur d'accès maillé sans fil (110-112) est configuré pour communiquer avec d'autres routeurs d'accès maillé sans fil (110-112) sur des liaisons de liaison terrestre (151-153) en utilisant l'interface réseau (220).

14. Support de stockage lisible par ordinateur (210) comprenant des instructions qui, en réponse à l'exécution par un processeur (208), ordonne à un appareil de réaliser un procédé selon l'une quelconque des revendications 1 à 10.
